# EUROPEAN PATENT SPECIFICATION

(11) **EP 4 222 007 B1**
(45) Date of publication and mention of the grant of the patent: **03.12.2025**
(21) Application number: 21794237.4
(22) Date of filing: 01.10.2021
(51) Int. Cl.: B60J 5/04, B60J 10/21, B60J 10/25, B60J 10/75, B60H 1/26, B60J 1/08

(54) **DOOR FOR A VEHICLE AND VEHICLE**
TÜR FÜR EIN FAHRZEUG UND FAHRZEUG
PORTE POUR UN VÉHICULE ET VÉHICULE

(30) Priority: 02.10.2020 NL 2026612
(43) Date of publication of application: 09.08.2023
(73) Proprietor: DAF Trucks N.V., 5643 TW Eindhoven (NL)
(72) Inventor: VAN DER HEIJDEN, Bart Franciscus Johannes, 5643 TW Eindhoven (NL); VAN GALEN, Haro, 5643 TW Eindhoven (NL); BROEDERS, Johannes Baptist Wilhelmus Bernardus Maria, 5643 TW Eindhoven (NL); VAN ROZENDAAL, Johannes Jacobus Maria, 5643 TW Eindhoven (NL); PIERIK, Gerardus Lambertus Hendrikus, 5643 TW Eindhoven (NL)
(74) Representative: V.O.
(86) International application number: PCT/NL2021/050598
(87) International publication number: WO 2022/071805

(56) References cited:
- JP-A- 2008 302 727
- JP-U- H01 132 418
- JP-U- H05 569
- JP-U- S60 192 922

## Description

The invention relates to a door for a vehicle, in particular for a truck, and to a vehicle, in particular a truck, with at least one door.

Doors for vehicles are adapted to provide access to a driver or passenger to the interior of the vehicle, in particular to the interior of the driver's compartment. Usually, a vehicle features at least two doors, arranged on either side of the vehicle. The doors feature windows in order to provide visibility to the side of the vehicle, the doors provide stiffness to the vehicle and/or the driver's compartment when closed and they are a part of the overall aerodynamic design of the vehicle. The windows of the doors can usually be opened, in order to allow fresh air to enter the interior of the vehicle and/or the driver's compartment and in order to allow verbal communication with persons outside of the vehicle.

In order to improve safety, doors for vehicles, in particular doors for trucks, can comprise additional windows, in particular lower windows. Such a lower window, located below the main side window, increases visibility of vulnerable road users (VRU), such as cyclists or pedestrians, when they are located next to the door. Especially for truck doors, such a lower window may provide the only opportunity to see a VRU located directly next to the door.

Doors with lower 'safety' windows, as known from the state of the art, exhibit at least one of the following shortcomings. Since the mechanism to lower the main side window pane interferes with the position of the lower windows, many doors with lower windows feature main side windows that cannot be opened, such that opening the main side window does not interfere with the lower window. In this case, no fresh air can enter through the main side window and, more importantly, verbal communication with persons outside of the vehicle is disturbed. Other doors with lower safety side window is fixed and the other part can be opened. This introduces a dividing bar between the two parts of the main side window, obstructing visibility. Yet often doors with lower safety windows are constructed such that water, especially rain, can reach the interior side of the lower window, which soils the lower window and deteriorates visibility.

JPH01132418 describes a vehicle door in which the main window can be lowered behind the lower safety window. A flap mechanism is arranged for guiding water away from the lower window when the main window is closed. However, such a design does not prevent the lower window getting soiled when the main window is opened.

The object of the present invention is therefore to provide a door for a vehicle, in particular for a truck, that overcomes the problems mentioned above. In particular, the object of the present invention is to provide a door for a vehicle with a main side window and a lower window, wherein the main side window can be fully opened and the interior side of the lower window does not get soiled, in particular by water droplets.

According to the invention, this object is achieved by a door for a vehicle according to claim 1 and by a vehicle according to claim 15.

According to the invention, a door for a vehicle, in particular for a truck, is provided. The door may be a driver's door or, commonly, a passenger door only. It has an exterior side and an interior side, wherein the exterior side is to be directed towards the surroundings of the vehicle and the interior side is to be directed towards the interior of a driver's compartment of the vehicle.

The door comprises a door frame with a main window frame for a main side window, wherein the main side window is slidable in a predominantly vertical direction with respect to the door frame between a closed position and an open position. In the closed position, the main side window closes the main window frame, and in the open position, the main side window opens at least parts of the main window frame. The open position of the main side window is especially used to allow fresh air to enter the interior of the driver's compartment and to verbally communicate with persons outside of the vehicle.

During opening and closing the main side window, the main side window moves through a side window slit which is located at a lower edge of the main window frame.

During opening and closing the main side window, the main side window moves through a side window slit which is located at a lower edge of the main window frame.

The door further comprises a lower window frame for a lower window and a lower window mounted in the lower window frame. The lower window frame is located below the main window frame such that the lower window provides visibility of objects and persons, especially vulnerable road users (VRU), such as cyclists or pedestrians, who are located next to the door and below the main side window. This increase in visibility improves the safety of the vehicle, since collisions can be avoided when objects or persons can be seen through the lower window.

The lower window is arranged such that the main side window pane is located on the interior side of the lower window when the main side window is in the open position.

The door further comprises a first sealing unit, attached to the door frame adjacent to the side window slit and being in contact with an exterior side of the main side window. Said first sealing unit seals water and dirt from entering the door frame, it cannot prevent that some remaining water and dirt may enter the door frame, especially around the longitudinal ends of the first sealing unit.

In order to prevent dripping of water entering the door frame onto the lower window and thus soiling the latter, and/or reducing visibility, the door comprises a second sealing unit, attached to the door frame between the main window frame and the lower window frame. The second sealing unit is in contact with the exterior side of the main side window pane, such that water that enters the door frame and runs down the main side window pane is stopped by the second sealing unit.

To stop the water from running down the main side window pane, the second sealing unit comprises a sealing lip, preferably a double sealing lip. The sealing lip extends on both sides beyond the longitudinal extent of the lower window pane such that at least the lower window is protected from water running down the main side window and dripping onto it.

The sealing lip has a main section and an end section. The main section of the sealing lip is predominantly horizontally oriented and the end section of the sealing lip, which is arranged adjacent to one end of the main section, is curved downward. Therefore, water can run along the main section to the end section and then drip down at the distal end of the end section bordering the main section. Since the sealing lip extends on both sides beyond the longitudinal extent of the lower window, the water dripping down will not hit the lower window and therefore the interior side of the lower window will remain clean and visibility will not be deteriorated.

Thus, the door according to the present invention comprises a main side window and a lower window, wherein the main side window can be fully opened and the interior side of the lower window does not get soiled, in particular by water droplets.

The sealing lip may have an other end section that is adjacent to the other end of the main section and that is curved downward. That is, arranged at either end of the main section, there is the end section and the other end section, respectively. In this case, water can also run along the main section to the other end section and then drip down at the end of the other end section that is opposite to the main section. Also the water dripping down from the end of the other end section will not hit the lower window, keeping the interior side of the lower window clean and not deteriorating visibility.

The second sealing unit may further comprise a gutter that is arranged at that distal end of the end section. This gutter directs the flow of the water coming from the sealing lip, preferably to a location where the water can then easily leave the door frame. With the gutter, it is even easier to prevent the water from hitting the lower window and thus soiling it and deteriorating visibility. The second sealing unit may also comprise a front end gutter that is arranged at that end of the other end section that is opposite to the main section. The advantages of the other gutter are similar to the advantages of the gutter as described above.

The second sealing unit may be an entity which is attached to an outer door panel of the door frame. This attachment is preferably performed as clipping the second sealing unit into the door panel, but other attachments such as screwing the second sealing unit to the door panel are also possible. A second sealing unit attached this way can be easily exchanged, for example, if the sealing lip has aged and is not watertight anymore. The sealing unit may be provided with a sealing foam to tightly close to the outer door panel.

The door may further comprise a ventilation arrangement, adapted to direct an air flow to the interior side of the lower window. This air flow may in particular prevent the interior side of the lower window from fogging, especially when it is cold outside the vehicle and/or humid inside the vehicle, which would deteriorate the visibility and thus decrease safety.

The ventilation arrangement may comprise an air duct module arranged in the door frame, featuring an inlet and a nozzle. The inlet is adapted to connect the air duct module to an air duct system of the vehicle. That way, no separate fan and/or heater is necessary for the ventilation arrangement. The inlet is preferably located close to hinges of the door and may comprise seals to prevent air from escaping between the air duct system and the air duct module. The nozzle is arrange at the other end of the air duct module and is adapted to direct an air flow to the interior side of the lower window.

To achieve an advantageous flow of air and to direct the air flow to a large portion of the interior side of the lower window, the nozzle may be arranged at a vertical edge of the lower window and the height of the nozzle may be approximately equal to the height of the lower window or the nozzle may be arranged at a horizontal edge of the lower window and the length of the nozzle may be approximately equal to the length of the lower window.

The air duct may feature a junction such that the air coming from the inlet is divided to the nozzle and to an upper branch of the air duct. Said upper branch of the air duct may be directed towards the interior of the driver's compartment and/or towards the main side window. In the former case, the air coming from the other branch of the air duct directly improves the climate in the driver's compartment, whereas in the latter case, the air coming form the other branch of the air duct helps in de-fogging the main side window, thus increasing visibly and safety.

The door may further comprise a lower interior glazing, arranged to cover the lower window from the inside of the cabin and arranged such that the main side window is located between the lower window and the lower interior glazing when the main side window is in the open position. Therefore, the interior space of the door frame, where water drops from the main side window and where air from the outside may enter, is separated from the interior of the driver's compartment by the lower interior glazing. Therefore, the climate in the interior of the driver's compartment is improved.

The lower interior glazing may be removably attached to the door frame. Thus, it is easy to detach the lower interior glazing from the door frame, for example, in order to clean the interior side of the lower window or the exterior side of the lower interior glazing, which improves visibility and thus safety. Compared to a lower interior glazing that is hinged to the door frame, a removably attached lower interior glazing may also be removed when the door is closed, which is advantageous especially in adverse weather conditions. Also, a removably attached lower interior glazing allows for a larger lower window frame and therefore increased vision. The lower interior glazing may, for example, be attached by means of hooks that fit into recesses of the door frame and locking devices attributed to the lower interior glazing and/or the door frame. That way, the locking devices just have to opened and the lower interior glazing can be removed, e.g., for cleaning purposes.

The lower window and/or the lower interior glazing may feature electric heating, such that they can be de-fogged and de-iced easily.

The door may further comprise an additional driver assistance system (ADAS) which comprises a flashing light that flashes when sensors detect a vulnerable road user in a predetermined vicinity of the vehicle. The flashing light is preferably arranged at the upper edge of the lower window frame, such that it can be easily seen by the VRU and alert the VRU. Also, a reflection of the flashing light in the lower window can be seen by the driver of the vehicle, therefore also alerting the driver of the vehicle of the VRU.

The door may further comprise a mirror arranged in the lower window frame. Preferably, a wide angle mirror is arranged between the lower external window pane and the lower interior glazing. With a wide angle mirror, the driver of the vehicle can see objects and/or vulnerable road users in a wide area to the side of the vehicle.

The door may further comprise a lifting mechanism, which moves the main side window in the predominantly vertical direction. In order to not obstruct the view through the lower window frame, the lifting mechanism is arranged on one or on either side of the lower window frame.

The lower window and/or the lower interior glazing may feature at least double glazing. Thus, the interior of the driver's compartment is better insulated from the surroundings of the vehicle, saving energy for heating and/or cooling and improving the interior climate.

Moreover, according to the invention, a vehicle, in particular a truck, is provided. Said vehicle comprises at least one door, in particular the passenger's door, according to the description above. The improvements, especially in terms of visibility and safety, as mentioned above, also apply to the vehicle equipped with the door according to the description above.

The invention will further be elucidated by description of some specific embodiments thereof, making reference to the attached drawings. The detailed description provides examples of possible implementations of the invention, but is to be regarded as illustrative without being restrictive on the invention. In the drawings:
Figure 1 shows a partial perspective view of one embodiment of a door,
Figure 2 shows a perspective view of one embodiment of a second sealing unit,
Figure 3 shows another perspective view of the embodiment of the second sealing unit shown in Figure 2,
Figure 4 shows a cross-sectional view of another embodiment of a door frame,
Figure 5 shows a close-up view of an embodiment of a second sealing unit clipped into an door panel of a door frame,
Figure 6 (A and B) shows a cross-sectional view of an embodiment of a door with an air duct module,
Figure 7 shows a side view of one embodiment of a truck with a passenger door,
Figure 8 shows a cross-sectional view of another embodiment of a door and
Figure 9 shows a cross-sectional view of yet another embodiment of a door.

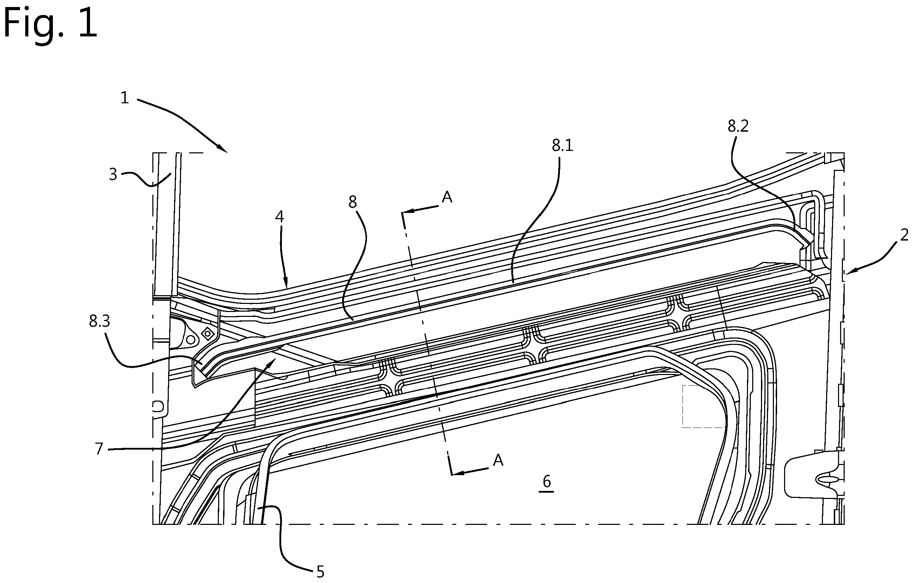

Figure 1 shows a partial perspective view of a door 1 for a vehicle, in particular for a truck. The door 1 comprises a door frame 2 with a main window frame 3. The main window frame 3 is adapted to be closed by a main side window, wherein the main side window is slidable in a predominantly vertical direction with respect to the door frame 2 between a closed position and an open position. In the closed position, the main side window keeps water, dirt, thieves, etc., out of a driver's compartment of the vehicle, whereas in the open position, fresh air may enter the driver's compartment of the vehicle and verbal communication with persons outside of the vehicle is enabled.

In order to seal the main side window with the main window frame 3, a first sealing unit 4 is provided at the lower edge of the main window frame 3. The first sealing unit 4 fails, however, to completely keep water and dirt from entering the door frame 2, especially at the ends of the first sealing unit 4.

Below the main window frame 3, a lower window frame 5 is provided and a lower window 6 is mounted in the lower window frame 5. The lower window 6 provides additional visibility of objects and persons, especially of vulnerable road users (VRU), such as cyclists or pedestrians, who are located next to the door 1 and below the main side window. Thus, the safety of the vehicle is improved, since collisions can be avoided when objects or persons can be seen through the lower window 6.

In order to keep water that passes by the first sealing unit 4 from dripping onto the lower window 6 and thus soiling the lower window 6 and reducing visibility through the lower window 6, a second sealing unit 7 is provided. The second sealing unit 7 is arranged between the main window frame 3 and the lower window frame 5.

The second sealing unit 7 comprises a sealing lip 8, which is constructed as a double sealing lip in the door 1 shown in Figure 1. The sealing lip 8, which extends on both sides beyond the longitudinal extent of the lower window 6, has a main section 8.1 that is predominantly horizontally oriented and end sections 8.2 and 8.3, wherein the end sections 8.2 and 8.3 are border main section 8.1 and are curved downward.

Water that passed the first sealing unit 4 and runs down the main side window will be stopped by the sealing lip 8. Said water will run along the main section 8.1 of the sealing lip 8 towards one of the end sections 8.2 or 8.3 of the sealing lip 8 and then drip down from that end of the end section 8.2 or 8.3 that is opposite to the main section 8.1. Since the sealing lip 8 extends beyond the longitudinal extent of the lower window 6, the water will not hit the lower window 6, such that the lower window 6 remains clean and visibility is retained. The sealing lip thus partly performs a function of a gutter guiding dripping water away from the lower window section.

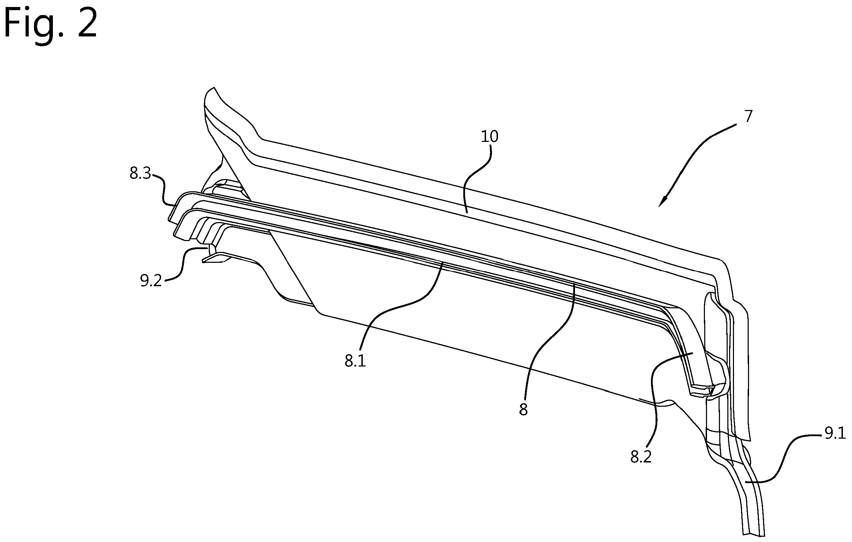

Figure 2 shows the second sealing unit 7 and the main section 8.1 as well as the rear end section 8.2 and front end section 8.3 of the sealing lip 8. Further, a gutter 9.1 is formed in the sealing unit 7 arranged at that distal end of end section 8.2 bordering main section 8.1. Likewise, front end gutter 9.2 is formed in sealing unit 7 at the front end section 8.3. Said gutters 9.1 and 9-2 are part of sealing unit 7 and adapted to guide the water that runs along the main section 8.1 of the sealing lip 8 and the downwards on the end section 8.2 or 8.3 of the sealing lip 8. This guidance of the water by the rear end gutter 9.1 or front end gutter 9.2 is such that the water is directed even further away from the lower window 6, such that water dripping onto the lower window 6 is even more unlikely. The water may also be directed by the gutter 9.1 or 9.2 to a location in the door frame 2 from which it can easily leave the door frame 2.

Moreover, the second sealing unit 7 may comprise an outer sealing lip 10, arranged in a lateral direction opposite to the sealing lip 8, such that the outer sealing lip 10 seals the second sealing unit 7 to the door frame 2. The sealing unit is preferably made of a single injection moulded piece, having the rubberlike sealing components, notably, sealing lip 8 and outer sealing lip 10 glued to it or provided by a dual moulding technique. Thus, water is prevented from entering lower portion the door frame 2, in particular, the lower window section.

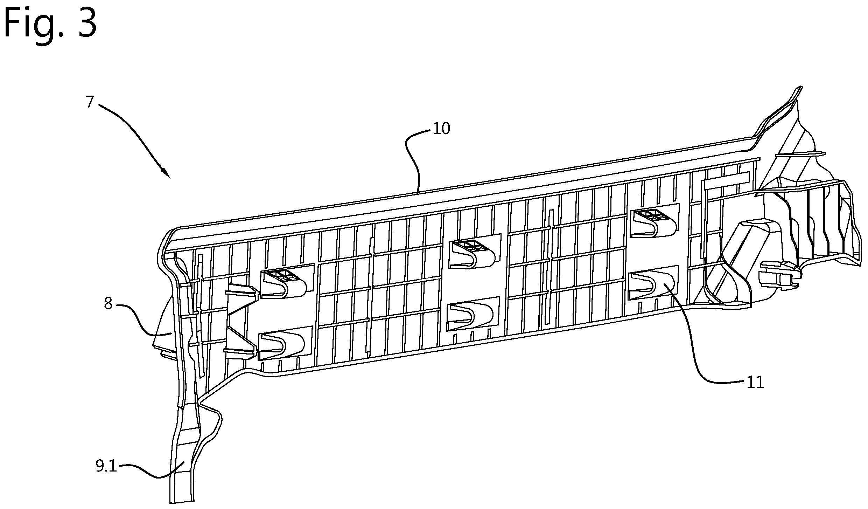

Figure 3 shows another perspective view of the embodiment of the second sealing unit 7 shown in Figure 2. In addition to the features shown in Figure 2 and discussed above, Figure 3 shows several clips 11 to attach the second sealing unit 7 to a door panel of the door frame 2. Said clips 11 provide a good and strong attachment of the second sealing unit 7 to the door frame 2 and the second sealing unit 7 remains removable, for example, in case it has to be replaced because the sealing lip 8 has aged.

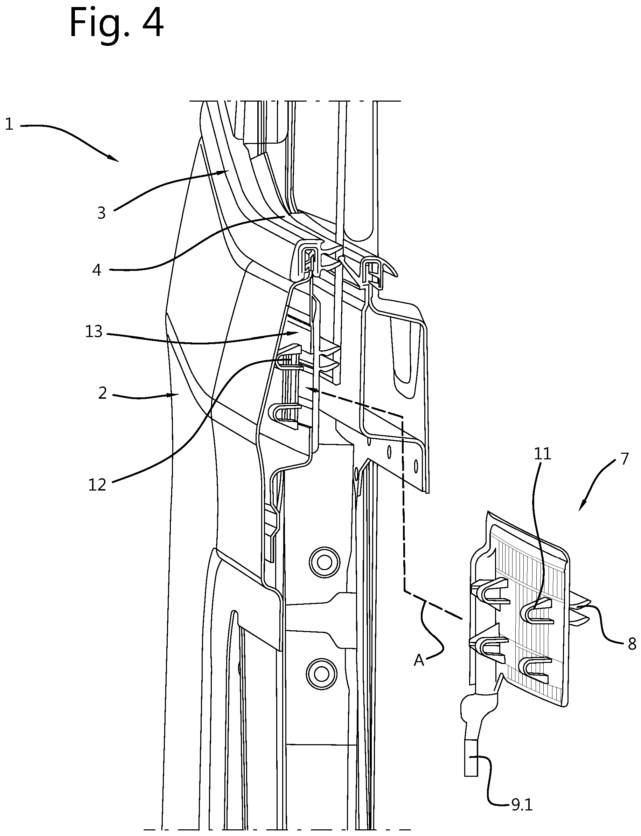

Figure 4 shows a cross-sectional view of another embodiment of a door frame 2 and a second sealing unit 7. The arrow A indicates where the clips 11 of the second sealing unit 7 are to be clipped into recesses 12 of an door panel 13 of the door frame 2. Naturally, other attachment options to attach the second sealing unit 7 to the door frame 2 are possible, e.g., with screws, screws and nuts, etc.

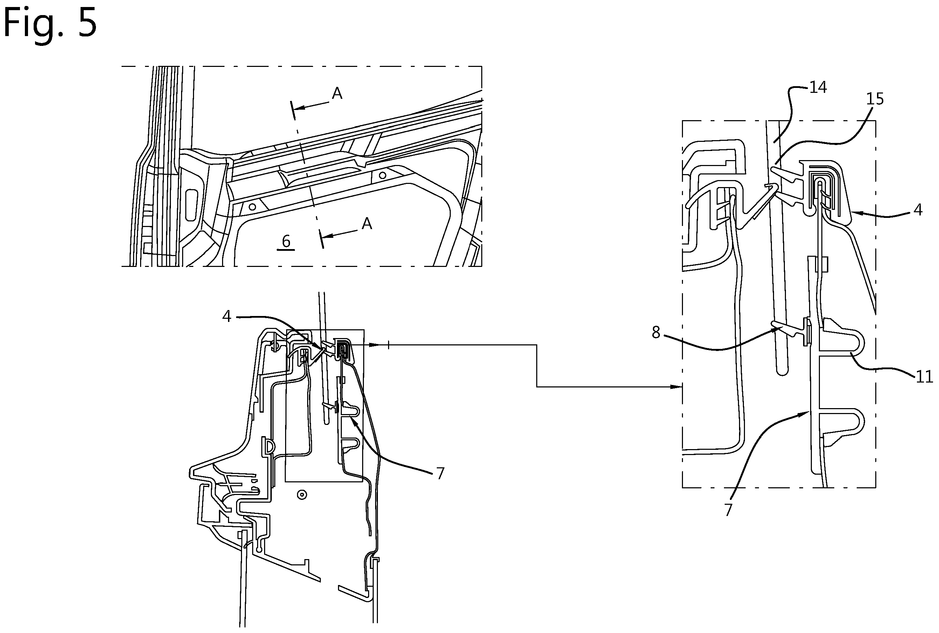

Figure 5 shows a close-up view of the second sealing unit 7 clipped into the door panel of the door frame 2 in section A-A. Figure 5 also shows the main side window pane 14 which is in contact with a sealing lip 15 of the first sealing unit 4 and the sealing lip 8 of the second sealing unit 7. Water that passes by the first sealing unit 4 is stopped by the sealing lip 8 of the second sealing unit 7 and guided away such that it does not hit the lower window 6.

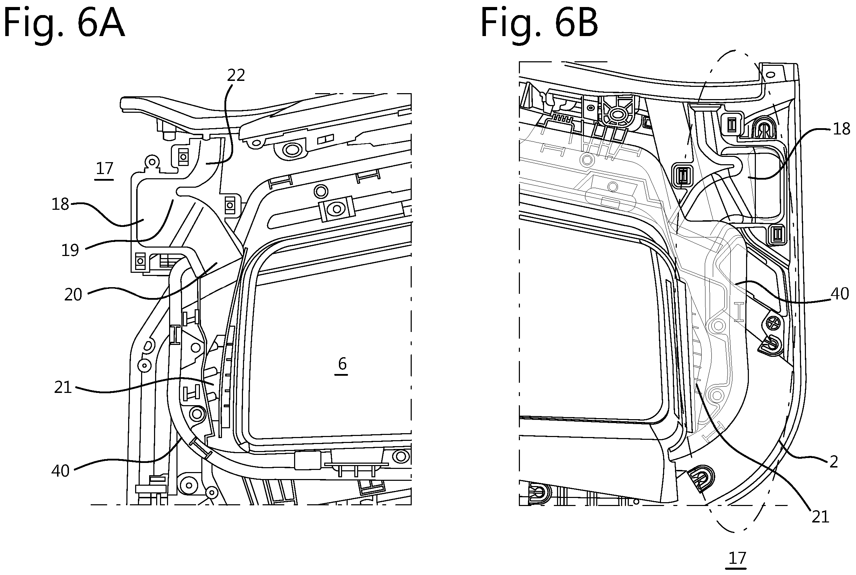

Figure 6 shows a cross-sectional view of an embodiment of a door 1 with a ventilation arrangement 16 comprising an air duct module 17. Figure A and B show essentially the same set up, but in Figure 6A the door frame 2 removed for clarity purposes and view from outside to inside, and in Figure 6B inner insert 40 obscured and view from the inside to the outside. The air duct module 17 features a branch duct 18 that is adapted to connect the air duct module 17 to an air duct system of the vehicle. That is, air, especially heated and/or dry air, coming from the air duct system of the vehicle can enter the air duct module 17 through the branch duct 18.

Following the inlet 18, in direction of air flow, a junction 19 is arranged in the air duct module 17. Said junction 19 divides the air flow into two branches: one branch 20 leading to a nozzle 21 that directs the air at the lower window 6 and the upper branch 22 that directs the air to the main side window 14. The air duct module thus features an insert 40, that can be attached to door frame 2, and that partly functions as air duct, and partly provides a mount for branch duct 18 and for nozzle 21.

In the embodiment shown in Figure 6, nozzle 21 is arranged at the front vertical edge of the lower window 6 and the height of the nozzle 21 is approximately equal to the height of the lower window 6. Thus, the air, especially the heated and/or dry air, is distributed evenly over the lower window 6. The distributed air de-fogs and/or de-ices the lower window 6, such that good visibility through the lower window 6 is retained. With both the second sealing unit 7 (not shown for clarity purposes in this Figure), keeping water drops away from the lower window 6, and the air duct module 17, keeping the lower window 6 free of fog and/or ice, good visibility through the lower window 6 is provided in all weather conditions, and thus safety is improved in all weather conditions.

The air being directed by the junction 19 to the upper branch 22 may, instead of towards the main side window 14, also be directed towards the interior of the driver's compartment. Also, a junction 19 may not be needed at all, if the air is only to be directed towards the lower window 6.

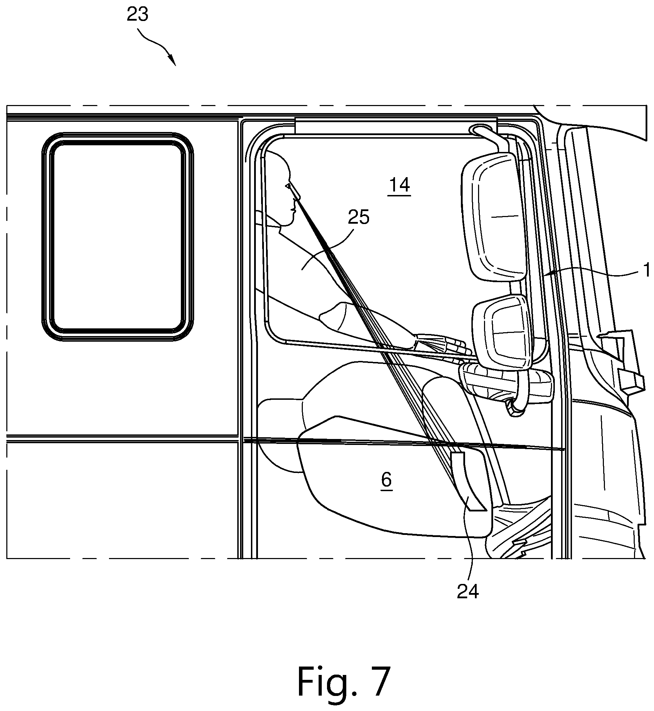

Figure 7 shows a side view of one embodiment of a vehicle 23, in particular a truck, with a door 1 comprising a main side window 14 and a lower window 6. The door 1 further comprises a mirror 24, arranged in the lower window frame 5. Said mirror 24 is preferably arranged on the interior side of the lower window 6, such that it not effected by water, ice and/or dirt. The mirror 24 is further arranged such that a driver 25 of the vehicle 23 can see the reflection of persons and/or objects that are located next to the vehicle 23 and behind the lower window 6.

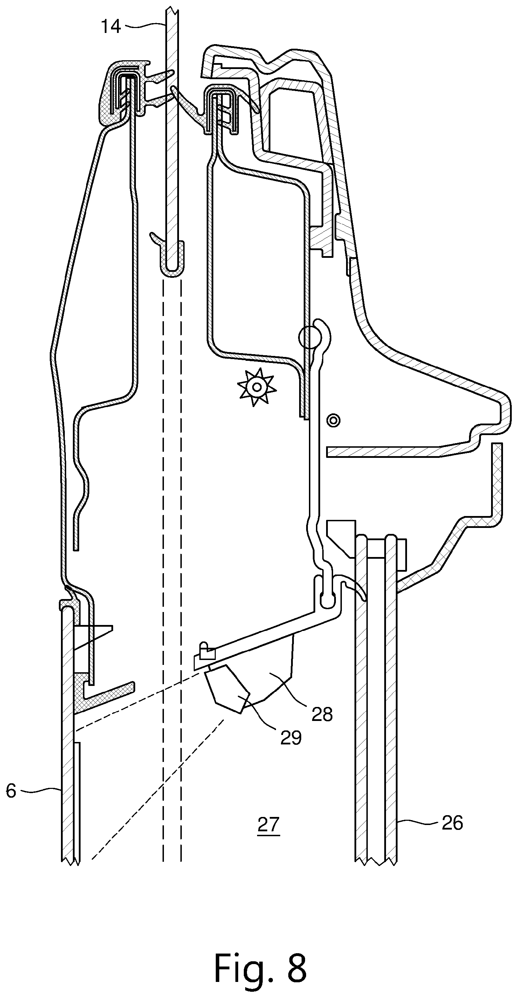

Figure 8 shows a cross-sectional view of another embodiment of a door 1 comprising in addition to the lower window 6 a lower interior glazing 26 that covers the lower window frame 5 from the inside of the cabin. The lower interior glazing 26 is arranged such that the main side window pane 14 is located between the lower window 6 and the lower interior glazing 26 when the main side window 14 is in the open position. The lower interior glazing 26 separates the interior space 27 of the door frame 2 from the interior of the driver's compartment, improving the climate in the interior of the driver's compartment. The further improve the climate in the interior of the driver's compartment, the lower interior glazing 26 features double glazing, improving the insulation provided by the lower interior glazing 26.

An additional driver assistance system (ADAS) 28 is arranged between the lower window 6 and the lower interior glazing 26. The ADAS 28 comprises a flashing light 29 that flashed when sensors (not shown here) detect a vulnerable road user (VRU) in a predetermined vicinity of the vehicle. The flashing light 29 is arranged at the upper edge of the lower window frame 5, such that it can be easily seen by the VRU and alert the VRU. Also, a reflection of the flashing light 29 in the lower window 6 can be seen by the driver 25 of the vehicle 23, therefore also alerting the driver 25 of the vehicle 23 of the VRU.

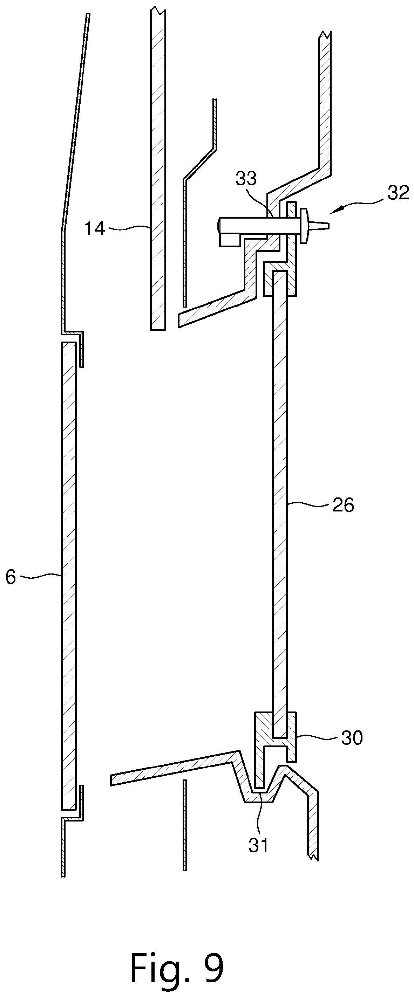

Figure 9 shows a cross-sectional view of yet another embodiment of a door 1, comprising a lower interior glazing 26 that is removably attached to the door frame 2. For this, hooks 30 are attached to the lower interior glazing 26 to fit into recesses 31 of the door frame 2. At the edge of the lower interior glazing 26 that is opposite to the hooks 30, locking devices 32 are arranged at the lower interior glazing 26. Said locking devices 32 fit into holes 33 in the door frame 2 and attach the lower interior glazing 26 tightly to the door frame 2.

By removing the lower interior glazing 26, the interior side of the lower window 6 and the exterior side of the lower interior glazing 26 can be cleaned, restoring high visibility through the lower interior glazing 26 and the lower window 6. The attachment of the lower interior glazing 26 with hooks 30 and locking devices 32 enables the removal of the lower interior glazing 26 when the door 1 is closed, so that cleaning can be performed even in adverse weather conditions, and it allows for construction of a large lower interior glazing 26.

## Claims

1. Door for a vehicle (23), in particular for a heavy goods vehicle, with an exterior side to be directed towards the surroundings of the vehicle (23) and an interior side to be directed towards the interior of a driver's compartment of the vehicle (23), comprising
a door frame (2) with a main window frame (3) for a main side window (14), a side window slit, through which the main side window (14) can move, located at a lower edge of the main window frame (3) and
a lower window frame (5), located below the main window frame (3), for a lower window (6);
wherein the main side window (14) is slidable in a predominantly vertical direction with respect to the door frame (2) between a closed position, where the main side window (14) closes the main window frame (3), and an open position, where the main side window (14) opens at least parts of the main window frame (3);
a first sealing unit (4), attached to the door frame (2) adjacent to the side window slit and being in contact with an exterior side of the main side window (14);
a second sealing unit (7), attached to the door frame (2) between the main window frame (3) and the lower window frame (5) and being in contact with the exterior side of the main side window (14); and
a lower window (6) mounted in the lower window frame (5) and arranged such that the main side window (14) is located on the interior side of the lower window (6) when the main side window (14) is in the open position,
wherein the second sealing unit (7) comprises a sealing lip (8), preferably a double sealing lip, wherein the sealing lip (8) extends on both sides beyond the longitudinal extent of the lower window (6), wherein the sealing lip (8) has a main section (8.1) that is predominantly horizontally oriented, **characterized in that** the sealing lip has a rear-end section (8.2), bordering the main section (8.1), that is curved downward along the longitudinal extent and **in that** the sealing lip (8) partly performs a function of a gutter guiding dripping water away from the lower window (6).

2. Door according to claim 1, wherein the sealing lip (8) has a front end section (8.3) bordering main section (8.1), opposite the first end section (8.2), that is curved downward.

3. Door according to claim 1 or 2, wherein the second sealing unit (7) further comprises a rear-end gutter (9.1) that is arranged at that end of the end section (8.2) that is opposite to the main section (8.1) and preferably a front-end gutter (9.2) that is arranged at that end of the other end section (8.3) that is opposite to the main section (8.1).

4. Door according to any of claims 1 to 3, wherein the second sealing unit (7) is a single entity which is attached to, preferably clipped into, a door panel (13) of the door frame (2).

5. Door according to any of claims 1 to 4, further comprising a ventilation arrangement (16), wherein the ventilation arrangement (16) is adapted to direct an air flow to the interior side of the lower window (6).

6. Door according to claim 5, wherein the ventilation arrangement (16) comprises an air duct module (17) arranged in the door frame (2), wherein the air duct module (17) features a branch duct (18), adapted to connect the air duct module (17) to an air duct system of the vehicle (23), an insert for mounting to the door frame (2) a nozzle (21), fluidly connected to the branch duct adapted to direct an air flow to the interior side of the lower window (6).

7. Door according to claim 6, wherein the nozzle (21) is arranged at a vertical edge of the lower window (6) and the height of the nozzle (21) is approximately equal to the height of the lower window (6) or the nozzle (21) is arranged at a horizontal edge of the lower window (6) and the length of the nozzle (21) is approximately equal to the length of the lower window (6).

8. Door according to claim 6 or 7, wherein the branch duct features a junction (19) and upper branch (22) of the air duct is directed towards the interior of the driver's compartment and/or towards the main side window (14).

9. Door according to any of claims 1 to 8, further comprising a lower interior glazing (26), arranged to cover the lower window frame (5) from the inside of the cabin and arranged such that the main side window (14) is located between the lower window (6) and the lower interior glazing (26) when the main side window (14) is in the open position.

10. Door according to claim 9, wherein the lower interior glazing (26) is removably attached to the door frame (2), for example, by means of hooks (30) that fit into recesses (31) of the door frame (2) and locking devices (32) attributed to the lower interior glazing (26) and/or the door frame (2).

11. Door according to any of claims 1 to 10, wherein the lower window (6) and/or the lower interior glazing (26) feature electric heating.

12. Door according to any of claims 1 to 11, further comprising an additional driver assistance system (28), ADAS, comprising a flashing light (29) preferably arranged at the upper edge of the lower window frame (5), that flashes when a vulnerable road user is detected in a predetermined vicinity of the vehicle (23).

13. Door according to any of claims 1 to 12, further comprising a mirror (24) arranged in the lower window frame (5), preferably between the lower window (6) and the lower interior glazing (26).

14. Door according to any of claims 1 to 13, wherein the lower window (6) and/or the lower interior glazing (26) features at least double glazing.

15. Vehicle, in particular truck, comprising at least one door (1) according to any of claims 1 to 14.

## Patentansprüche

1. Tür für ein Fahrzeug (23), insbesondere für ein Nutzfahrzeug, mit einer zur Umgebung des Fahrzeugs (23) gerichteten Außenseite und einer zum Innenraum eines Fahrerraums des Fahrzeugs (23) gerichteten Innenseite, mit
einem Türrahmen (2) mit einem Hauptfensterrahmen (3) für ein Hauptseitenfenster (14), einen Seitenfensterschlitz, durch den das Hauptseitenfenster (14) bewegbar ist, der sich an einer Unterkante des Hauptfensterrahmens (3) befindet, und
einem unteren Fensterrahmen (5), der sich unterhalb des Hauptfensterrahmens (3) befindet, für ein unteres Fenster (6);
wobei das Hauptseitenfenster (14) in einer vorwiegend vertikalen Richtung in Bezug auf den Türrahmen (2) zwischen einer Schließstellung, in der das Hauptseitenfenster (14) den Hauptfensterrahmen (3) verschließt, und einer Offenstellung, in der das Hauptseitenfenster (14) zumindest Teile des Hauptfensterrahmens (3) öffnet, verschiebbar ist;
eine erste Dichtungseinheit (4), die an dem Türrahmen (2) benachbart zu dem Seitenfensterschlitz angebracht ist und mit einer Außenseite des Hauptseitenfensters (14) in Kontakt steht;
eine zweite Dichtungseinheit (7), die am Türrahmen (2) zwischen dem Hauptfensterrahmen (3) und dem unteren Fensterrahmen (5) angebracht ist und mit der Außenseite des Hauptseitenfensters (14) in Kontakt steht; und
einem unteren Fenster (6), das im unteren Fensterrahmen (5) angebracht und so angeordnet ist, dass sich das Hauptseitenfenster (14) an der Innenseite des unteren Fensters (6) befindet, wenn sich das Hauptseitenfenster (14) in der Offenstellung befindet,
wobei die zweite Dichtungseinheit (7) eine Dichtlippe (8), vorzugsweise eine doppelte Dichtlippe, aufweist, wobei sich die Dichtlippe (8) beidseitig über die Längserstreckung des unteren Fensters (6) hinaus erstreckt, wobei die Dichtlippe (8) einen überwiegend horizontal ausgerichteten Hauptabschnitt (8.1) aufweist,
**dadurch gekennzeichnet, dass** die Dichtlippe einen an den Hauptabschnitt (8.1) angrenzenden, in Längsrichtung nach unten gekrümmten Hinter-Endabschnitt (8.2) aufweist und dass die Dichtlippe (8) teilweise eine Funktion einer Rinne zum Ableiten von Tropfwasser vom unteren Fenster (6) erfüllt.

2. Tür nach Anspruch 1, wobei die Dichtlippe (8) einen dem ersten Endabschnitt (8.2) gegenüberliegenden, an den Hauptabschnitt (8.1) angrenzenden vorderen Endabschnitt (8.3) aufweist, der nach unten gekrümmt ist.

3. Tür nach Anspruch 1 oder 2, wobei die zweite Dichtungseinheit (7) weiter eine Hinter-End-Rinne (9.1) aufweist, die an dem Ende des Endabschnitts (8.2) angeordnet ist, das dem Hauptabschnitt (8.1) gegenüberliegt, und vorzugsweise eine Vorder-End-Rinne (9.2), die an dem Ende des anderen Endabschnitts (8.3) angeordnet ist, das dem Hauptabschnitt (8.1) gegenüberliegt.

4. Tür nach einem der Ansprüche 1 bis 3, wobei die zweite Dichtungseinheit (7) eine einzige Einheit ist, die an einer Türfüllung (13) des Türrahmens (2) befestigt, vorzugsweise eingeklipst ist.

5. Tür nach einem der Ansprüche 1 bis 4, weiter umfassend eine Belüftungsanordnung (16), wobei die Belüftungsanordnung (16) so ausgebildet ist, dass sie einen Luftstrom zur Innenseite des unteren Fensters (6) leitet.

6. Tür nach Anspruch 5, wobei die Belüftungsanordnung (16) ein Luftkanalmodul (17) aufweist, das im Türrahmen (2) angeordnet ist, wobei das Luftkanalmodul (17) eine Abzweigleitung (18) aufweist, die so ausgebildet ist, dass sie das Luftkanalmodul (17) mit einem Luftkanalsystem des Fahrzeugs (23) verbindet, einen Einsatz zum Befestigen einer Düse (21) am Türrahmen (2), die mit der Abzweigleitung in Fluidverbindung steht und so ausgebildet ist, dass sie einen Luftstrom zur Innenseite des unteren Fensters (6) leitet.

7. Tür nach Anspruch 6, wobei die Düse (21) an einer vertikalen Kante des unteren Fensters (6) angeordnet ist und die Höhe der Düse (21) ungefähr gleich der Höhe des unteren Fensters (6) ist oder die Düse (21) an einer horizontalen Kante des unteren Fensters (6) angeordnet ist und die Länge der Düse (21) ungefähr gleich der Länge des unteren Fensters (6) ist.

8. Tür nach Anspruch 6 oder 7, wobei die Abzweigleitung eine Abzweigung (19) aufweist und eine obere Abzweigleitung (22) der Luftleitung zum Innenraum des Fahrerraums und/oder zur Hauptseitenscheibe (14) hin gerichtet ist.

9. Tür nach einem der Ansprüche 1 bis 8, weiter umfassend eine untere Innenverglasung (26), die so angeordnet ist, dass sie den unteren Fensterrahmen (5) von der Innenseite der Kabine aus abdeckt, und so angeordnet ist, dass sich das Hauptseitenfenster (14) zwischen dem unteren Fenster (6) und der unteren Innenverglasung (26) befindet, wenn sich das Hauptseitenfenster (14) in der Offenstellung befindet.

10. Tür nach Anspruch 9, wobei die untere Innenverglasung (26) lösbar am Türrahmen (2) befestigt ist, beispielsweise mittels Haken (30), die in Aussparungen (31) des Türrahmens (2) eingreifen, und Verriegelungsvorrichtungen (32), die der unteren Innenverglasung (26) und/oder dem Türrahmen (2) zugeordnet sind.

11. Tür nach einem der Ansprüche 1 bis 10, wobei das untere Fenster (6) und/oder die untere Innenverglasung (26) eine elektrische Heizung aufweisen.

12. Tür nach einem der Ansprüche 1 bis 11, weiter umfassend ein zusätzliches Fahrerassistenzsystem (28), ADAS, umfassend ein Blinklicht (29), das vorzugsweise an der Oberkante des unteren Fensterrahmens (5) angeordnet ist und blinkt, wenn ein ungeschützter Verkehrsteilnehmer in einer vorbestimmten Umgebung des Fahrzeugs (23) erkannt wird.

13. Tür nach einem der Ansprüche 1 bis 12, weiter umfassend einen Spiegel (24), der im unteren Fensterrahmen (5), vorzugsweise zwischen dem unteren Fenster (6) und der unteren Innenverglasung (26), angeordnet ist.

14. Tür nach einem der Ansprüche 1 bis 13, wobei das untere Fenster (6) und/oder die untere Innenverglasung (26) mindestens eine Doppelverglasung aufweist.

15. Fahrzeug, insbesondere LKW, umfassend mindestens eine Tür (1) nach einem der Ansprüche 1 bis 14.

## Revendications

1. Porte pour un véhicule (23), en particulier pour un véhicule poids lourd, avec un côté extérieur destiné à être dirigé vers l'environnement du véhicule (23) et un côté intérieur destiné à être dirigé vers l'intérieur d'une cabine de conducteur du véhicule (23), comprenant
un cadre de porte (2) avec un cadre de fenêtre principale (3) pour une fenêtre latérale principale (14), une fente de fenêtre latérale, à travers laquelle la fenêtre latérale principale (14) peut se déplacer, située au niveau d'un bord inférieur du cadre de fenêtre principal (3), et
un cadre de fenêtre inférieure (5), situé sous le cadre de fenêtre principal (3), pour une fenêtre inférieure (6) ;
dans laquelle la fenêtre latérale principale (14) peut coulisser dans une direction principalement verticale par rapport au cadre de porte (2) entre une position fermée, dans laquelle la fenêtre latérale principale (14) ferme le cadre de fenêtre principale (3), et une position ouverte, dans laquelle la fenêtre latérale principale (14) ouvre au moins des parties du cadre de fenêtre principale (3) ;
une première unité d'étanchéité (4), fixée au cadre de porte (2) adjacente à la fente de fenêtre latérale et étant en contact avec un côté extérieur de la fenêtre latérale principale (14) ;
une seconde unité d'étanchéité (7), fixée au cadre de porte (2) entre le cadre de fenêtre principale (3) et le cadre de fenêtre inférieure (5) et étant en contact avec le côté extérieur de la fenêtre latérale principale (14) ; et
une fenêtre inférieure (6) montée dans le cadre de fenêtre inférieure (5) et agencée de telle sorte que la fenêtre latérale principale (14) soit située sur le côté intérieur de la fenêtre inférieure (6) lorsque la fenêtre latérale principale (14) est dans la position ouverte,
dans laquelle la seconde unité d'étanchéité (7) comprend une lèvre d'étanchéité (8), de préférence une double lèvre d'étanchéité, dans lequel la lèvre d'étanchéité (8) s'étend des deux côtés au-delà de l'étendue longitudinale de la fenêtre inférieure (6), dans laquelle la lèvre d'étanchéité (8) présente une section principale (8.1) qui est orientée principalement horizontalement,
**caractérisée en ce que**
la lèvre d'étanchéité présente une section d'extrémité arrière (8.2), bordant la section principale (8.1), qui est incurvée vers le bas le long de l'étendue longitudinale, et **en ce que** la lèvre d'étanchéité (8) remplit partiellement une fonction de gouttière guidant de l'eau qui s'écoule loin de la fenêtre inférieure (6).

2. Porte selon la revendication 1, dans laquelle la lèvre d'étanchéité (8) présente une section d'extrémité avant (8.3) bordant la section principale (8.1), opposée à la première section d'extrémité (8.2), qui est incurvée vers le bas.

3. Porte selon la revendication 1 ou 2, dans laquelle la seconde unité d'étanchéité (7) comprend en outre une gouttière d'extrémité arrière (9.1) qui est agencée au niveau de cette extrémité de la section d'extrémité (8.2) qui est opposée à la section principale (8.1) et de préférence une gouttière d'extrémité avant (9.2) qui est agencée au niveau de cette extrémité de l'autre section d'extrémité (8.3) qui est opposée à la section principale (8.1).

4. Porte selon l'une quelconque des revendications 1 à 3, dans laquelle la seconde unité d'étanchéité (7) est une entité unique qui est fixée à, de préférence clipsée dans, un panneau de porte (13) du cadre de porte (2).

5. Porte selon l'une quelconque des revendications 1 à 4, comprenant en outre un agencement de ventilation (16), dans laquelle l'agencement de ventilation (16) est adapté pour diriger un flux d'air vers le côté intérieur de la fenêtre inférieure (6).

6. Porte selon la revendication 5, dans laquelle l'agencement de ventilation (16) comprend un module de conduits d'air (17) agencé dans le cadre de porte (2), dans laquelle le module de conduits d'air (17) présente un conduit de dérivation (18), adapté pour connecter le module de conduit d'air (17) à un système de conduit d'air du véhicule (23), un insert pour monter une buse (21) sur le cadre de porte (2), connectée de manière fluidique au conduit de dérivation adapté pour diriger un flux d'air vers le côté intérieur de la fenêtre inférieure (6).

7. Porte selon la revendication 6, dans laquelle la buse (21) est agencée au niveau d'un bord vertical de la fenêtre inférieure (6) et la hauteur de la buse (21) est approximativement égale à la hauteur de la fenêtre inférieure (6), ou la buse (21) est agencée au niveau d'un bord horizontal de la fenêtre inférieure (6) et la longueur de la buse (21) est approximativement égale à la longueur de la fenêtre inférieure (6).

8. Porte selon la revendication 6 ou 7, dans laquelle le conduit de dérivation présente une jonction (19) et la branche supérieure (22) du conduit d'air est dirigée vers l'intérieur de la cabine du conducteur et/ou vers la fenêtre latérale principale (14).

9. Porte selon l'une quelconque des revendications 1 à 8, comprenant en outre un vitrage intérieur inférieur (26), agencé pour couvrir le cadre de fenêtre inférieur (5) depuis l'intérieur de la cabine et agencé de telle sorte que la fenêtre latérale principale (14) soit située entre la fenêtre inférieure (6) et le vitrage intérieur inférieur (26) lorsque la fenêtre latérale principale (14) est dans la position ouverte.

10. Porte selon la revendication 9, dans laquelle le vitrage intérieur inférieur (26) est fixé de manière amovible au cadre de porte (2), par exemple, au moyen de crochets (30) qui s'adaptent dans des évidements (31) du cadre de porte (2) et de dispositifs de verrouillage (32) attribués au vitrage intérieur inférieur (26) et/ou au cadre de porte (2).

11. Porte selon l'une quelconque des revendications 1 à 10, dans laquelle la fenêtre inférieure (6) et/ou le vitrage intérieur inférieur (26) présentent un chauffage électrique.

12. Porte selon l'une quelconque des revendications 1 à 11, comprenant en outre un système d'aide à la conduite supplémentaire (28), ADAS, comprenant un voyant clignotant (29) agencé de préférence au niveau du bord supérieur du cadre de fenêtre inférieure (5), qui clignote lorsqu'un usager de la route vulnérable est détecté à un proximité prédéterminée du véhicule (23).

13. Porte selon l'une quelconque des revendications 1 à 12, comprenant en outre un miroir (24) agencé dans le cadre de fenêtre inférieure (5), de préférence entre la fenêtre inférieure (6) et le vitrage intérieur inférieur (26).

14. Porte selon l'une quelconque des revendications 1 à 13, dans laquelle la fenêtre inférieure (6) et/ou le vitrage intérieur inférieur (26) présente au moins un double vitrage.

15. Véhicule, en particulier camion, comprenant au moins une porte (1) selon l'une quelconque des revendications 1 à 14.
